# EUROPEAN PATENT SPECIFICATION

(11) **EP 1 958 373 B1**
(45) Date of publication and mention of the grant of the patent: **25.03.2009**
(21) Application number: 06831941.7
(22) Date of filing: 27.11.2006
(51) Int. Cl.: H04L 9/32

(54) **PHYSICAL SECRET SHARING AND PROOFS OF VICINITY USING PUFS**
PHYSISCHES VERTEILEN VON GEHEIMNISSEN UND BEWEISEN DER NÄHE UNTER VERWENDUNG VON PUFS
PARTAGE DE SECRET PHYSIQUE ET PREUVES DE PROXIMITE UTILISANT DES PUFS

(30) Priority: 29.11.2005 EP 05111419
(43) Date of publication of application: 20.08.2008
(73) Proprietor: Koninklijke Philips Electronics N.V., 5621 BA Eindhoven (NL)
(72) Inventor: SKORIC, Boris, 5656 AA Eindhoven (NL); BRUEKERS, Alphons, A.M.L., 5656 AA Eindhoven (NL); TUYLS, Pim T., 5656 AA Eindhoven (NL); OPHEY, Willem, G., NL-5656 AA Eindhoven (NL)
(74) Representative: Van Velzen, Maaike Mathilde
(86) International application number: PCT/IB2006/054442
(87) International publication number: WO 2007/063473

(56) References cited:
- WO-A-03/090259
- GASSEND B ET AL: "Controlled physical random functions" COMPUTER SECURITY APPLICATIONS CONFERENCE, 2002. PROCEEDINGS. 18TH ANNUAL 9-13 DEC. 2002, PISCATAWAY, NJ, USA,IEEE, 9 December 2002 (2002-12-09), pages 149-160, XP010627027 ISBN: 0-7695-1828-1

## Description

The present invention relates to a method of creating challenge-response pairs, a method of authenticating a plurality of physical tokens, a system for creating challenge-response pairs and a device for authenticating a plurality of physical tokens.

A *Physical Uncloneable Function (PUF)* is a structure used for creating a tamper-resistant environment in which parties may establish a shared secret. A PUF is a physical token to which an input - a *challenge* - is provided. When the challenge is provided to the PUF, it produces a random analog output referred to as a *response*. Because of its complexity and the physical laws it complies with, the token is considered to be 'uncloneable', i.e. unfeasible to physically replicate and/or computationally model. A PUF is sometimes also referred to as a *Physical Random Function*. A PUF can be substantially strengthened if it is combined with a control function. In practice, the PUF and an algorithm that is inseparable from the PUF is comprised within a tamper-resistant chip. The PUF can only be accessed via the algorithm and any attempt to by-pass or manipulate the algorithm will destroy the PUF. The algorithm, which is implemented in hardware, software or a combination thereof, governs the input and output of the PUF. For instance, frequent challenging of the PUF is prohibited, certain classes of challenges are prohibited, the physical output of the PUF is hidden, only cryptographically protected data is revealed, etc. Such measures substantially strengthen the security, since an attacker cannot challenge the PUF at will and cannot interpret the responses. This type of PUF is referred to as a controlled PUF (CPUF).

An example of a PUF is a 3D optical medium containing light scatterers at random positions. The input - i.e. the challenge - can be e.g. angle of incidence of a laser beam that illuminates the PUF, and the output - i.e. the response - is a speckle pattern. In an *enrollment phase*, a challenge is provided to the PUF, which produces a unique and unpredictable response to the challenge. The challenge and the corresponding response may be stored at a verifier with whom authentication subsequently is to be undertaken. If enrollment data are encrypted, hashed or in any other appropriate manner cryptographically protected, it can in principle be stored anywhere in the world. For instance, it may be stored in connection to the PUF itself. This frees an enroller from the obligation of maintaining a database. Typically, in an *authentication phase*, the verifier provides a proving party with the challenge that was stored in the enrollment phase. If the proving party is able to return a response to the challenge, which response matches the response that was stored in the enrollment phase, the proving party is considered to have proven access to a shared secret, and is thus authenticated by the verifier. Both the enrollment phase and the authentication phase should be undertaken without revealing the shared secret, i.e. the response, which typically involves setting up secure channels by means of encryption.

PUFs are e.g. implemented in tokens employed by users to authenticate themselves and thus get access to certain data, services or devices. The tokens may for example comprise smartcards communicating by means of radio frequency signals or via a wired interface (such as USB) with the device to be accessed.

The above-mentioned prior art is disclosed in the document WO 03/090259 A. In detail, the said document discloses a method of creating and storing a challenge-response pair in an environment comprising a plurality of physical tokens.

In certain types of mathematical secret sharing schemes known in the art, different sets of information are given to a number (N) of people. Much like fitting pieces together in a jigsaw puzzle, these information sets are combined such that they reveal a secret. In general, if fewer than N people combine their information sets, they learn nothing about the secret, even though variations exist where it is sufficient to combine k pieces (k < N). An essential feature in existing secret sharing schemes is that a proof is provided that a certain number of different information sets have been combined. This can serve as a proof that a sufficient number of authorized participants have agreed to something, e.g. opening a safe. An example of a prior art secret sharing scheme uses polynomials. The secret comprises a y-axis coordinate in a 2D plane, namely the coordinate where a secret polynomial of degree k-1 intersects the y-axis. Every participant receives a different polynomial coordinate. If k people combine their data, they can reconstruct the polynomial and compute the coordinate where the secret polynomial intersects the y-axis.

In some situations, it is desirable to prove not only that information sets have been combined, but that physical carriers of the information sets actually are (or have been) located in the same place. Such a 'physical' proof could e.g. prove that a group of people have been present together in the same room at the same time. In prior art secret sharing schemes, such proofs are not reliable, since the information sets on which a proof is to be based can be copied and communicated at high speed over arbitrary distances.

An object of the present invention is to solve the problems mentioned in the above and to enable a group of people or devices to provide a physical proof that they actually have been physically gathered.

This is attained by a method of creating a challenge-response pair in accordance with claim 1, a method of authenticating a plurality of physical tokens in accordance with claim 10, a system for creating a challenge-response pair in accordance with claim 13 and a device for authenticating a plurality of physical tokens in accordance with claim 14.

In a first aspect of the present invention, there is provided a method comprising the steps of interconnecting a plurality of physical tokens in a sequence, supplying the sequence of physical tokens with a challenge, wherein the sequence of physical tokens is arranged such that a response of a token is passed on as a challenge to a subsequent token until a final physical token produces a response, whereby a challenge-response pair is created. Further, the method comprises the step of storing the challenge supplied to the sequence of physical tokens.

In a second aspect of the present invention, there is provided a method comprising the steps of supplying a sequence of interconnected physical tokens with a challenge created during enrollment, the sequence of physical tokens being arranged such that a response of a token is passed on as a challenge to a subsequent token until a final physical token produces a response. Further, the method comprises the steps of receiving information based on the response of the final physical token and comparing the information based on the response of the final physical token with information based on a response corresponding to said challenge created during enrollment, wherein the physical tokens comprised in the sequence are authenticated if there is correspondence between the information based on the response of the final physical token and the information based on the response created during enrollment.

In a third aspect of the present invention, there is provided a system comprising a plurality of physical tokens interconnecting in a sequence and enrolling means for supplying the sequence of physical tokens with a challenge, wherein the sequence of physical tokens is arranged such that a response of a token is passed on as a challenge to a subsequent token until a final physical token produces a response, whereby a challenge-response pair is created.

In a fourth aspect of the present invention, there is provided a device comprising means for supplying a sequence of interconnected physical tokens with a challenge created during enrollment, said sequence of physical tokens being arranged such that a response of a token is passed on as a challenge to a subsequent token until a final physical token produces a response, means for receiving information based on the response of the final physical token, and means for comparing the information based on the response of the final physical token with information based on a response corresponding to the challenge created during enrollment, wherein the physical tokens comprised in the sequence are authenticated if there is correspondence between the information based on the response of the final physical token and the information based on the response created during enrollment.

A basic idea of the invention is tq interconnect a plurality of physical tokens, such as a plurality of uncloneable functions (PUFs), in a sequence, provide the sequence with a challenge and use a response of a PUF as a challenge to a subsequent PUF in the sequence. When a final PUF is reached in the sequence and produces a response, a challenge-response pair (CRP) has been created, which pair comprises the challenge provided to the sequence of PUFs and the response produced by the final PUF. At least the challenge of this CRP is then stored, as will be discussed in the following. Hence, assume that a group of e.g. three PUFs are interconnected in sequence and a challenge is provided to a first PUF. The first PUF produces a response to the challenge and passes this response on to a second PUF, which in a similar manner produces a response that is provided to a third (and final) PUF. A resulting challenge-response pair (CRP) is then created, which pair comprises the challenge provided to the first PUF and the response produced by the third PUF. Hence, the PUFs are interconnected, or concatenated, in the sense that a physical output (i.e. response) of a PUF is used as a physical input (i.e. challenge) to a subsequent PUF. Preferably, creation of the challenge-response pair occurs in an enrollment phase.

The challenge and the corresponding response may be stored at a verifier with whom authentication subsequently is to be undertaken. However, if enrollment data are encrypted, hashed or in any other appropriate manner cryptographically protected, it can virtually be stored anywhere. For instance, it may be stored in connection to the PUF itself. This frees an enroller from the obligation of maintaining a database of CRPs. A response of a PUF is information which in general should not be made publicly available, since an eavesdropper having access to a response may be able to deceive a verifier.

Further, the party performing the actual enrollment (i.e. the enroller) is not necessarily the same as the party who subsequently performs verification (i.e. the verifier). For instance, a bank may centrally enroll a user, while verification of the user typically is undertaken at a local bank office. Furthermore, the challenge and the response are not necessarily stored together, but may be separated and stored in different physical locations. Alternatively, the response is not stored at all. In practice, a plurality of CRPs are created in the enrollment phase, and at least the challenge of the CRP is stored, such that the CRP can be re-created. As is understood by a skilled person, if the enrolling party and the verifying party are not the same, it may for security reasons be necessary to provide a CRP with a signature of the enroller, such that the verifier is ensured that the CRP has been created by means of a trusted enroller. The signature of the enroller is further necessary when a CRP is physically stored where the enroller cannot control it, such as in vicinity of any one of the PUFs in an enrolled sequence. In cases where the enrollment data is kept in a secure location, no signature is necessary.

If ad-hoc enrollment of a plurality of users that are not known in advance is to be performed, it may be mandatory that each user identifies himself/herself to the enrolling party. This may be performed by using a private key of the respective user to create a corresponding digital signature.

Subsequently, in an authentication phase, the physical uncloneable functions that were concatenated in the enrollment phase are re-concatenated. The verifier at which authentication is to be performed selects a challenge from a CRP which was created and stored in the enrollment phase. The selected challenge is supplied to the first PUF, which produces a response and feeds this response as a challenge to the subsequent second PUF. The second PUF produces a response which is provided to the final third PUF. The final PUF responds to this challenge by producing a final response. If the final response matches the stored response comprised in said CRP, the verifier is convinced that the first, second and third PUF are physically present in the same location, i.e. that they have been physically interconnected. Hence, a proof of PUF interconnection is supplied. Note that in this exemplifying embodiment, three PUFs are interconnected. Clearly, any number of PUFs may be concatenated in an established sequence to create a CRP in the enrollment phase. Similarly, in the authentication phase, the same PUFs must be interconnected in the established sequence for authentication to be successful. The present invention advantageously utilizes the uncloneability property of PUFs, which ensures that the characteristic of a PUF is unfeasible to replicate.

In accordance with an embodiment of the present invention, the PUFs are associated with a user by means of e.g. an identifier linking the PUFs to the user. This is advantageous, since a user has to present and interconnect a plurality of PUFs to be authenticated at a verifier. This strengthens security compared to prior art authentication systems in which a user only have to create a response to a given challenge using one *single* PUF.

In accordance with an example of the present invention, after enrollment has taken place, each PUF is associated with a different user by means of e.g. an identifier linking the PUF to the user. Apart from the above mentioned proof of interconnection, the PUF may also be used for private purposes such as withdrawing money or getting access to data that is personal (or at least non-accessible to the public). This has the advantage that users are discouraged to give away their PUF, e.g. for the purpose of creating a fake proof that they have been present to interconnect their PUFs with other PUFs.

After enrollment has taken place, the PUFs are handed over to the user(s) with whom they are associated, if the PUFs not already have been assigned to the users. The users are not necessarily informed about the order of concatenation of the PUFs when authentication is to be undertaken. In case they are not given the concatenation order, the order in itself becomes a secret which can be considered to strengthen security in a system; if the users do not know the concatenation order employed during enrollment, it will in practice be unfeasible to guess the order when a larger number of PUFs are concatenated.

In an example of the invention, after enrollment has taken place, the enroller encrypts a secret (e.g. a random number or a randomly generated message) with a cryptographic key based on a response, to a certain challenge, of a concatenation of PUFs. Thus, an encrypted data set *E_{R}(m)* is created, wherein *E_{R}(m)* denotes encryption of a message *m* with the response R. In this embodiment, the response need not be stored. The enroller (or a verifier) then distributes the PUFs to the user(s) together with the challenge and the encrypted secret (and order of concatenation, if the order is not already known by the users). The user(s) will only be able to decrypt the cryptographically protected secret if the PUFs are concatenated such that a correct response may be created to the distributed challenge, i.e. the concatenation order that was used during enrollment must be used during authentication. Note that the key employed to encrypt the secret may be created in a number of different ways. For instance, the key may consist of a hash of the response, or may be the actual response. Further, the enroller may challenge the sequence of PUFs with a plurality of challenges, while the ordering of the PUFs is constant, and derive a cryptographic key from the resulting responses. In the authentication phase, the PUFs must be provided with the plurality of challenges to re-create the key for decrypting the encrypted secret.

In another embodiment, a plurality of different PUF concatenations are enrolled, each with a separate challenge and a separate unique response to the challenge. The enroller encrypts the secret with a cryptographic key derived from the responses. The users receive their respective PUFs, the challenges and the corresponding concatenation orders. In order to create a plain text copy of the secret, they have to create the same PUF concatenations as during enrollment, challenge each concatenation of PUFs, and obtain the correct responses. By combining their responses such that a decryption key may be derived, the secret can be decrypted.

In yet another example, the encryption of the secret involves mathematical secret sharing.

In a further embodiment of the present invention, a challenge is provided to the PUF located first in a sequence of physically interconnected PUFs, and the response of the first PUF is provided as a challenge to a second PUF in the chain an so on, as has been described in the above, until the last PUF in the chain produces a response. The challenge provided to the first PUF and the response produced by the last PUF constitutes a challenge-response pair. A *challenge-response data set* is created comprising the challenge-response pair, an identifier for each PUF employed to create the challenge-response pair and order of concatenation of the PUFs. As previously has been discussed, the response to a challenge is not necessarily stored. In that case, the response is not included in the data set. This challenge-response data set may be signed by the enrolling party. Preferably, the users to whom the PUFs belong prepare a statement that they have been gathered (possibly under particular circumstances for a particular purpose) and attach this statement to the challenge-response data set. Then, each user signs the complete statement, including the challenge-response data set, using his or her private key. Now, the digitally signed challenge-response data set is stored and serves as a proof that these users not only agree to the statement, but also that they actually have been physically together (at some moment in time). Later, if someone questions the validity of the proof, for instance in a court, the users can meet and the court can verify that they are able to generate the response to the challenge of the challenge-response data set. This particular embodiment is not necessarily implemented in an environment in which enrollment of PUFs is undertaken. It may advantageously be employed for generating an ad-hoc proof for any unforeseen combination of PUFs. Nevertheless, this embodiment can advantageously be employed when enrolling a plurality of PUFs, as has been discussed in the above.

It should be understood that it may be necessary to store the order in which PUFs are concatenated in the enrollment phase in case the order to be employed in the authentication phase is not known in advance. Otherwise, the users do not know in which order to concatenate their PUFs to produce a valid response to a given challenge.

Further features of, and advantages with, the present invention will become apparent when studying the appended claims and the following description. Those skilled in the art realize that different features of the present invention can be combined to create embodiments other than those described in the following.

A detailed description of preferred embodiments of the present invention will be given in the following with reference made to the accompanying drawings, in which:
Fig. 1 shows enrollment of a plurality of PUFs at an enrolling party in accordance with an embodiment of the present invention.
Fig. 2 shows authentication of a plurality of enrolled PUFs at a verifying party in accordance with an embodiment of the present invention.
Fig. 3 shows usage of statements in accordance with an embodiment of the present invention.

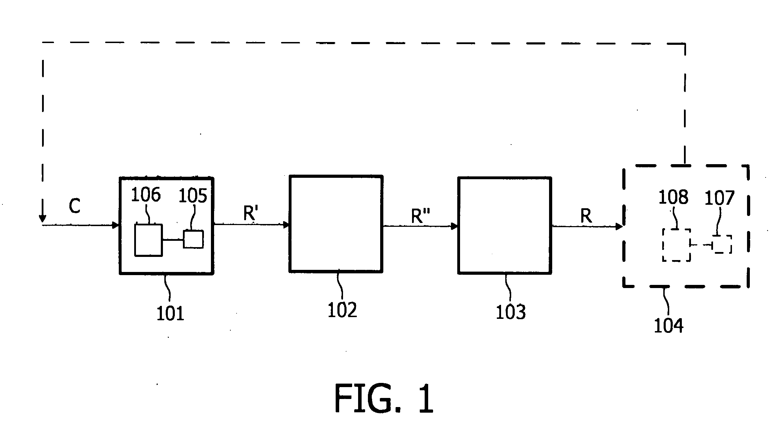

Fig. 1 shows enrollment of a plurality of PUFs 101, 102, 103 at an enrolling party 104 in accordance with an embodiment of the present invention. The PUFs are connected in a sequence, in which a physically output of a PUF 101, 102 is used as physical input to a subsequent PUF 102, 103 in the sequence. First, the enrolling authority provides the PUF 101 located first in the sequence with a challenge *C*. This challenge may be embodied in many different ways, depending on which type of PUF is used.

For instance, a controlled PUF (CPUF) is employed, which comprises a PUF combined with a control function. Typically, the PUF and an algorithm that is inseparable from the PUF is comprised within a tamper-resistant chip. The PUF can only be accessed via the algorithm and any attempt to by-pass or manipulate the algorithm will destroy the PUF. In general, the chip comprises computing means 105 and storing means 106, which execute the algorithm and store software for implementing it. Typically, the enrolling party 104 also comprises computing means 107 and storing means 108. The PUF used may e.g. be a 3D optical medium containing light scatterers at random positions. The input (i.e. the challenge) to the PUF can for instance be a laser beam originating from a laser diode comprised in the chip, and the output (i.e. the response) is a speckle pattern detected by light detecting elements arranged in the chip. The chip is arranged with an input via which a challenge may be supplied and an output via which a response may be provided. The challenge is typically provided to a CPUF in the form of digital data which is converted in the CPUF into operating parameters of the laser diode, e.g. luminance, such that an appropriate challenge is supplied to the PUF. When the resulting speckle pattern, i.e. the response, is detected, it is converted into digital data which can exit the CPUF via its output.

The challenge *C* provided to the first PUF 101 is typically embodied in the form of a digital bit stream distributed by the enrolling party 104, which bit stream is converted by the processing means of the chip into operating parameters of the laser diode. The bit stream may e.g. control the wavelength of the laser diode, wherein different bit streams will result in different challenges provided to the PUF. The first PUF 101 thus produces a response *R'* to the challenge *C* and passes this response on to the second PUF 102, which in a similar manner produces a response *R"* that is provided to the third, final PUF 104. A challenge-response pair (CRP) comprising *C* and *R* is hence created, and the PUFs have been enrolled at the enrolling party 104.

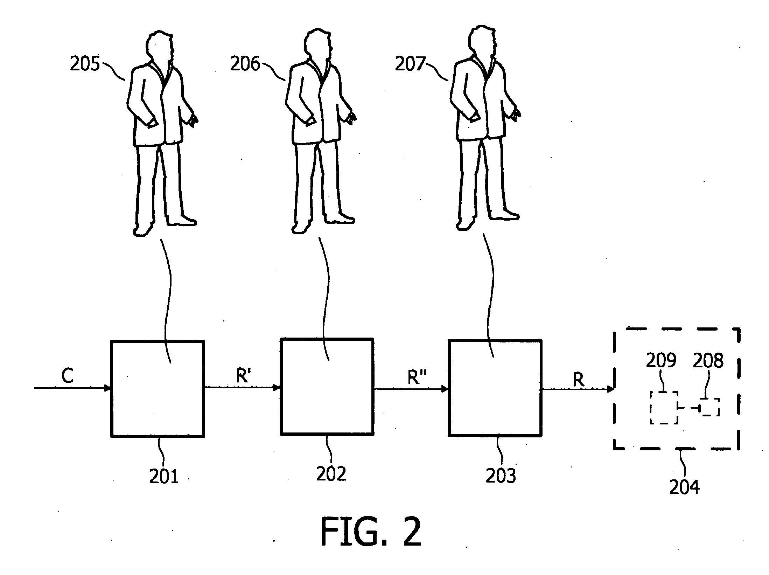

Fig. 2 shows authentication of a plurality of enrolled PUFs 201, 202, 203 at a verifying party 204 comprising a microprocessor in accordance with an embodiment of the present invention. The PUFs are, either before or after enrollment, associated with a respective user 205, 206, 207. When authentication is performed at the verifying party 204, which not necessarily is the same as the enrolling party as previously has been discussed, the PUFs are concatenated in the order in which they were enrolled. In case the enroller and the verifier are not the same party, it may (for security reasons) be necessary to provide the CRP with a digital signature of the enroller in the enrollment phase. If a digital signature is employed, the verifier uses a public key of the enroller to check that the CRP has been correctly signed. A challenge *C* is supplied to the first PUF 201, which produces a response R' and feeds this response as a challenge to the second PUF 202.

Note that the manner in which the challenge *C* is supplied to the first PUF 201 may vary depending on where the challenge is stored. If the challenge is stored at any one of the PUFs 201, 202, 203 it may not be necessary for the verifier 204 to supply the challenge, even though that scenario also is possible.

The second PUF produces a response *R'* which is provided to the third, final PUF 203. The final PUF responds to this challenge by producing a final response *R"*. If the final response matches the response of the enrolled CRP, the verifier is convinced that the first, second and third PUF are physically present in the same location, i.e. that they have been physically interconnected. Hence, a proof of PUF interconnection is supplied. In another embodiment of the present invention, a plurality of PUFs are interconnected in a first order during enrollment and a CRP is created as described in connection to Fig. 1. However, in this embodiment, the plurality of PUFs are then interconnected in a second order, and a further CRP *C1, R1* (not shown in Fig. 1) is created. With reference to Fig. 2, when the PUFs subsequently are to be authenticated, the users 205, 206, 207 must interconnect them in the first order, provide them with the appropriate challenge C and produce the corresponding response *R* and supply the verifier 204 with the response. Further, the users must interconnect the PUFs in the second order in which they were enrolled, provide them with the corresponding challenge *C1* and produce a response *R1* accordingly and supply the verifier with this second response. Hence, the enrolling procedure of Fig. 1 and the authenticating procedure of Fig. 2 must be provided once for each different order in which the PUFs are interconnected.

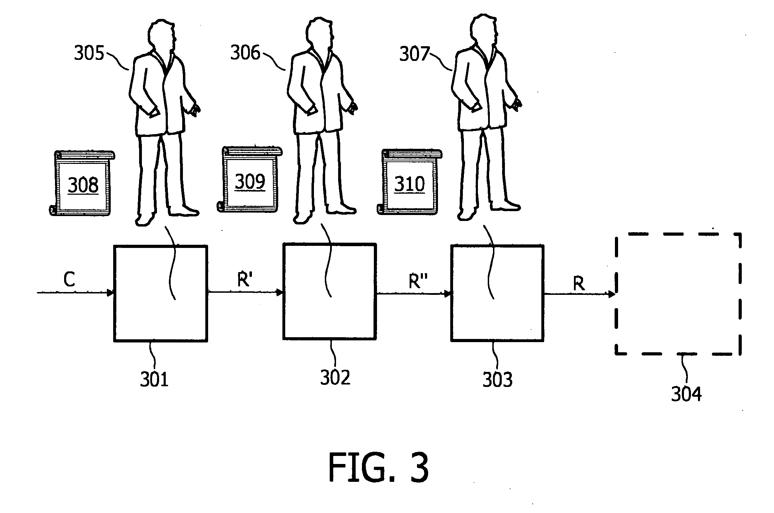

In Fig. 3, there is shown that after a challenge *C* has been provided to a sequence of PUFs 301, 302, 303 and a final response *R* has been produced, a challenge-response data set is created comprising the challenge-response pair *C*, *R*, an identifier for each PUF employed to create the challenge-response pair and order of concatenation of the PUFs. The users 305, 306, 307 to whom the PUFs belong each prepare a statement 308, 309, 310 that they have been gathered and attach this statement to the challenge-response data set. Then, each user signs the complete statement, including the challenge-response data set, using his or her private key. The digitally signed challenge-response data set is stored and serves as a proof to a verifier 304 (or some other party) that these users not only agree to the statement, but also that they actually have been together to concatenate their PUFs. As previously have been mentioned, this particular embodiment is not necessarily implemented in an environment in which enrollment of PUFs is undertaken.

It should be noted that even though the PUFs should be physically interconnected during enrollment and authentication, enrollment and authentication data may be received from/transferred to a remote location. As is understood by the skilled person, this reception/transmission may e.g. comprise submitting data via the Internet of some other appropriate network.

Further, error correction schemes may be used, e.g. to correct a final response from a sequence of PUFs such that noise is eliminated and reproducible data is obtained. For instance, *helper data* schemes known in the art may be employed. In order to combine the deriving of challenge-response pairs with cryptographic techniques, helper data may be derived during the enrollment phase. The helper data guarantees that a unique response can be derived from a challenge during the authentication as well as during the enrolment phase. Hence, the helper data scheme brings robustness in that it enables correction of noisy authentication data such that the data obtained at authentication matches the enrollment data that it is expected to be identical with. Of course, other appropriate error correction schemes may be envisaged by the skilled person.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

## Claims

1. A method of creating a challenge-response pair comprising the steps of:
- interconnecting a plurality of physical tokens (101, 102, 103) in a sequence;
- supplying the sequence of physical tokens with a challenge (*C*), wherein the sequence of physical tokens is arranged such that a response of a token is passed on as a challenge to a subsequent token until a final physical token produces a response (*R*), whereby a challenge-response pair is created; and
- storing the challenge supplied to the sequence of physical tokens.

2. The method according to claim 1, further comprising the step of storing the response (*R*) of the final physical token (103).

3. The method according to claim 1, further comprising the step of associating a user with at least one of the interconnected physical tokens.

4. The method according to claim 1, further comprising the steps of:
- creating a challenge data set comprising the challenge (*C*), an identifier for each physical token (101, 102, 103) and an order in which the physical tokens are interconnected in sequence when creating the challenge-response pair; and
- storing the challenge data set.

5. The method according to claim 4, further comprising the step of including the response (R) in the challenge data set, wherein a challenge-response data set is created.

6. The method according to claim 4, further comprising the steps of including, in the challenge data set, a statement by the different users that they have been gathered.

7. The method according to claim 1, further comprising the step of distributing an enrolled physical token (201) to a respective user (205).

8. The method according to claim 1, further comprising the steps of:
- changing the order in which the plurality of physical tokens (101, 102, 103) are interconnected in a sequence;
- supplying the sequence of physical tokens with a further challenge (*C1*), wherein the sequence of tokens is arranged such that a response of a token is passed on as a challenge to a subsequent token until a final physical token produces a response (*R1*); and
- storing said further challenge supplied to the sequence of physical tokens as a further challenge data set.

9. The method according to claim 1, wherein the physical tokens comprise physical uncloneable functions.

10. A method of authenticating a plurality of physical tokens, comprising the steps of:
- supplying a sequence of interconnected physical tokens (201, 202, 203) with a challenge (*C*) created during enrollment, said sequence of physical tokens being arranged such that a response of a token is passed on as a challenge to a subsequent token until a final physical token produces a response (*R*);
- receiving information based on the response of the final physical token; and
- comparing said information based on the response of the final physical token with information based on a response corresponding to said challenge created during enrollment, wherein the physical tokens comprised in the sequence are authenticated if there is correspondence between the information based on the response of the final physical token and the information based on the response created during enrollment.

11. The method according to claim 10, further comprising the step of providing an order in which the physical tokens (201, 202, 203) associated with the supplied challenge (*C*) are to be interconnected.

12. The method according to claim 10, further comprising the steps of:
- receiving a statement (308, 309, 310) that users (305, 306, 307) associated with the physical tokens (301, 302, 303) have been gathered; and
- checking a signature of the statement.

13. A system for creating a challenge-response pair, said system comprising:
- a plurality of physical tokens (101, 102, 103) interconnected in a sequence; and
- enrolling means (104) for supplying the sequence of physical tokens with a challenge (*C*), wherein the sequence of physical tokens is arranged such that a response of a token is passed on as a challenge to a subsequent token until a final physical token produces a response (R), whereby a challenge-response pair is created.

14. A device (204) for authenticating a plurality of physical tokens (201, 202, 203), said device comprising:
- means (209) for supplying a sequence of interconnected physical tokens (201, 202, 203) with a challenge (*C*) created during enrollment, said sequence of physical tokens being arranged such that a response of a token (201) is passed on as a challenge to a subsequent token (202) until a final physical token (203) produces a response (*R*);
- means (209) for receiving information based on the response of the final physical token; and
- means (209) for comparing said information based on the response of the final physical token with information based on a response corresponding to said challenge created during enrollment, wherein the physical tokens comprised in the sequence are authenticated if there is correspondence between the information based on the response of the final physical token and the information based on the response created during enrollment.

15. A computer program product comprising computer-executable code means for causing a device (204) to perform the steps recited in claim 10 when the computer-executable code means are run on a processing unit (209) included in the device.

## Patentansprüche

1. Verfahren zum Schaffen eines Challenge-Response-Paares, wobei das Verfahren die folgenden Schritte umfasst:
- Zusammenschalten einer Vielzahl von physischen Tokens (101, 102, 103) in einer Folge;
- Zuführen einer Challenge (C) zu der Folge von physischen Tokens, wobei die Folge von physischen Tokens so angeordnet ist, dass eine Response eines Tokens als eine Challenge an ein nachfolgendes Token weitergeleitet wird, bis ein letztes physisches Token eine Response (R) erzeugt, wodurch ein Challenge-Response-Paar geschaffen wird; und
- Speichern der der Folge von physischen Tokens zugeführten Challenge.

2. Verfahren nach Anspruch 1, das weiterhin den Schritt des Speicherns der Response (R) des letzten physischen Tokens (103) umfasst.

3. Verfahren nach Anspruch 1, das weiterhin den Schritt des Zuordnens eines Benutzers zu mindestens einem der zusammen geschalteten physischen Tokens umfasst.

4. Verfahren nach Anspruch 1, das weiterhin die folgenden Schritte umfasst:
- Schaffen eines Challenge-Datensatzes mit der Challenge (C), einem Identifizierer für jedes physische Token (101, 102, 103) und einer Reihenfolge, in der die physischen Token in Reihe zusammen geschaltet werden, wenn das Challenge-Response-Paar geschaffen wird; und
- Speichern des Challenge-Datensatzes.

5. Verfahren nach Anspruch 4, das weiterhin den Schritt des Aufnehmens der Response (R) in den Challenge-Datensatz umfasst, wobei ein Challenge-Response-Datensatz geschaffen wird.

6. Verfahren nach Anspruch 4, das weiterhin den Schritt des Aufnehmens eines Statements durch die verschiedenen Benutzer in den Challenge-Datensatz umfasst, welches besagt, dass sie versammelt gewesen sind.

7. Verfahren nach Anspruch 1, das weiterhin den Schritt des Verteilens eines registrierten physischen Tokens (201) an einen betreffenden Benutzer (205) umfasst.

8. Verfahren nach Anspruch 1, das weiterhin die folgenden Schritte umfasst:
- Ändern der Reihenfolge, in der die Vielzahl von physischen Token (101, 102, 103) in einer Reihe zusammen geschaltet werden;
- Zuführen einer weiteren Challenge (C1) zu der Folge von physischen Tokens, wobei die Folge von Tokens so angeordnet ist, dass eine Response eines Tokens als eine Challenge an ein nachfolgendes Token weitergeleitet wird, bis ein letztes physisches Token eine Response (R1) erzeugt; und
- Speichern der weiteren der Folge von physischen Tokens zugeführten Challenge als einen weiteren Challenge-Datensatz.

9. Verfahren nach Anspruch 1, wobei die physischen Tokens physikalisch unklonbare Funktionen umfassen.

10. Verfahren zur Authentisierung einer Vielzahl von physischen Tokens, das die folgenden Schritte umfasst:
- Zuführen einer während der Registrierung erstellten Challenge (C) zu einer Folge von zusammen geschalteten physischen Tokens (201, 202, 203), wobei die genannte Folge von physischen Tokens so angeordnet ist, dass eine Response eines Token als eine Challenge an ein nachfolgendes Token weitergeleitet wird, bis ein letztes physisches Token eine Response (R) erzeugt;
- Empfangen von Informationen, die auf der Response des letzten physischen Tokens basieren; und
- Vergleichen der genannten Informationen, die auf der Response des letzten physischen Tokens basieren, mit Informationen, die auf einer Response basieren, welche der genannten, während der Registrierung erstellten Challenge entspricht, wobei die in der Folge enthaltenen physischen Tokens authentisiert werden, wenn eine Übereinstimmung zwischen den auf der Response des letzten physischen Tokens basierenden Informationen und den auf der während der Registrierung erstellten Response basierenden Informationen besteht.

11. Verfahren nach Anspruch 10, das weiterhin den Schritt des Schaffens einer Reihenfolge umfasst, in der die zu der gelieferten Challenge (C) gehörenden physischen Tokens (201, 202, 203) zusammen geschaltet werden.

12. Verfahren nach Anspruch 10, das weiterhin die folgenden Schritte umfasst:
- Empfangen eines Statements (308, 309, 310), das zu den physischen Tokens (301, 302, 303) gehörende Benutzer (305, 306, 307) versammelt gewesen sind; und
- Prüfen einer Signatur des Statements.

13. System zum Schaffen eines Challenge-Response-Paares, wobei das genannte System Folgendes umfasst:
- eine Vielzahl von physischen Tokens (101, 102, 103), die in einer Folge zusammen geschaltet sind; und
- Registrierungsmittel (104) zum Zuführen einer Challenge (C) zu der Folge von physischen Tokens, wobei die Folge von physischen Tokens so angeordnet ist, dass eine Response eines Tokens als eine Challenge an ein nachfolgendes Token weitergeleitet wird, bis ein letztes physisches Token eine Response (R) erzeugt, wodurch ein Challenge-Response-Paar geschaffen wird.

14. Einrichtung (204) zur Authentisierung einer Vielzahl von physischen Tokens (201, 202, 203), wobei die genannte Einrichtung Folgendes umfasst:
- Mittel (209) zum Zuführen einer während der Registrierung erzeugten Challenge (C) zu einer Folge von zusammen geschalteten physischen Tokens (201, 202, 203), wobei die genannte Folge von physischen Tokens so angeordnet ist, dass eine Response eines Tokens (201) als eine Challenge an ein nachfolgendes Token (202) weitergeleitet wird, bis ein letztes physisches Token (203) eine Response (R) erzeugt;
- Mittel (209) zum Empfangen von Informationen, die auf der Response des letzten physischen Tokens basieren; und
- Mittel (209) zum Vergleichen der genannten, auf der Response des letzten physischen Tokens basierenden Informationen mit Informationen, die auf einer Response basieren, welche der genannten während der Registrierung erzeugten Challenge entspricht, wobei die in der Folge enthaltenen physischen Tokens authentisiert werden, wenn eine Übereinstimmung zwischen den auf der Response des letzten physischen Tokens basierenden Informationen und den auf der während der Registrierung erstellten Response basierenden Informationen besteht.

15. Computerprogrammprodukt, das von einem Computer ausführbare Codemittel umfasst, die eine Einrichtung (204) veranlassen, die in Anspruch 10 dargelegten Schritte durchzuführen, wenn die von einem Computer ausführbaren Codemittel auf einer in der Einrichtung enthaltenen Verarbeitungseinheit (209) ausgeführt werden.

## Revendications

1. Procédé destiné à créer une paire de défi-réponse comprenant les étapes consistant à :
- interconnecter une pluralité de jetons physiques (101, 102, 103) dans une séquence;
- lancer un défi (C) à la séquence de jetons physiques, dans lequel la séquence de jetons physiques est agencée de telle sorte qu'une réponse d'un jeton est transférée en tant que défi à un jeton suivant jusqu'à ce qu'un jeton physique final produise une réponse (R), de telle manière qu'une paire de défi-réponse soit créée ; et
- stocker le défi lancé à la séquence de jetons physiques.

2. Procédé selon la revendication 1, comprenant en outre l'étape consistant à stocker la réponse (R) du jeton physique final (103).

3. Procédé selon la revendication 1, comprenant en outre l'étape consistant à associer un utilisateur à au moins l'un des jetons physiques interconnectés.

4. Procédé selon la revendication 1, comprenant en outre les étapes consistant à :
- créer un jeu de données de défi comprenant le défi (C), un identifiant pour chaque jeton physique (101, 102, 103) et un ordre dans lequel les jetons physiques sont interconnectés en séquence lors de la création de la paire de défi-réponse ; et
- stocker le jeu de données de défi.

5. Procédé selon la revendication 4, comprenant en outre l'étape consistant à inclure la réponse (R) dans le jeu de données de défi, dans lequel un jeu de données de défi-réponse est créé.

6. Procédé selon la revendication 4, comprenant en outre l'étape consistant à inclure dans le jeu de données de défi une déclaration des différents utilisateurs qu'ils ont été réunis.

7. Procédé selon la revendication 1, comprenant en outre l'étape consistant à distribuer un jeton physique inscrit (201) à un utilisateur respectif (205).

8. Procédé selon la revendication 1, comprenant en outre les étapes consistant à :
- changer l'ordre dans lequel la pluralité de jetons physiques (101, 102, 103) sont interconnectés dans une séquence ;
- lancer un autre défi (C1) à la séquence de jetons physiques, dans lequel la séquence de jetons est agencée de telle sorte qu'une réponse d'un jeton est transférée en tant que défi à un jeton suivant jusqu'à ce qu'un jeton physique final produise une réponse (R1) ; et
- stocker ledit autre défi lancé à la séquence de jetons physiques en tant qu'autre jeu de données de défi.

9. Procédé selon la revendication 1, dans lequel les jetons physiques comprennent des fonctions physiques ne pouvant pas être clonées.

10. Procédé destiné à authentifier une pluralité de jetons physiques, comprenant les étapes consistant à :
- lancer à une séquence de jetons physiques interconnectés (201, 202, 203) un défi (C) créé pendant l'inscription, ladite séquence de jetons physiques qui est agencée de telle sorte qu'une réponse d'un jeton soit transférée en tant que défi à un jeton suivant jusqu'à ce qu'un jeton physique final produise une réponse (R) ;
- recevoir des informations basées sur la réponse du jeton physique final ; et
- comparer lesdites informations basées sur la réponse du jeton physique final aux informations basées sur une réponse correspondant audit défi créé pendant l'inscription, dans lequel les jetons physiques compris dans la séquence sont authentifiés s'il y a une correspondance entre les informations basées sur la réponse du jeton physique final et les informations basées sur la réponse créée pendant l'inscription.

11. Procédé selon la revendication 10, comprenant en outre l'étape consistant à fournir un ordre dans lequel les jetons physiques (201, 202, 203) associés au défi lancé (C) doivent être interconnectés.

12. Procédé selon la revendication 10, comprenant en outre les étapes consistant à :
- recevoir une déclaration (308, 309, 310) que les utilisateurs (305, 306, 307) associés aux jetons physiques (301, 302, 303) ont été réunis ; et
- contrôler une signature de la déclaration.

13. Système destiné à créer une paire de défi-réponse, ledit système comprenant :
- une pluralité de jetons physiques (101, 102, 103) interconnectés dans une séquence ; et
- des moyens d'inscription (104) pour lancer un défi (C) à la séquence de jetons physiques, dans lequel la séquence de jetons physiques est agencée de telle sorte qu'une réponse d'un jeton soit transférée en tant que défi à un jeton suivant jusqu'à ce qu'un jeton physique final produise une réponse (R), de manière à ce qu'une paire de défi-réponse soit créée.

14. Dispositif (204) destiné à authentifier une pluralité de jetons physiques (201, 202, 203), ledit dispositif comprenant :
- des moyens (209) pour lancer à une séquence de jetons physiques interconnectés (201, 202, 203) un défi (C) créé pendant l'inscription, ladite séquence de jetons physiques étant agencée de telle sorte qu'une réponse d'un jeton (201) soit transférée en tant que défi à un jeton suivant (202) jusqu'à ce qu'un jeton physique final (203) produise une réponse (R) ;
- des moyens (209) pour recevoir des informations basées sur la réponse du jeton physique final ; et
- des moyens (209) pour comparer lesdites informations basées sur la réponse du jeton physique final aux informations basées sur la réponse correspondant audit défi créé pendant l'inscription, dans lequel les jetons physiques compris dans la séquence sont authentifiés s'il y a une correspondance entre les informations basées sur la réponse du jeton physique final et les informations basées sur la réponse créée pendant l'inscription.

15. Produit de programme informatique comprenant un moyen de code exécutable par ordinateur amenant un dispositif (204) à effectuer les étapes selon la revendication 10 lorsque le moyen de code exécutable par ordinateur est exécuté sur une unité de traitement (209) incluse dans le dispositif.
